# EUROPÄISCHE PATENTANMELDUNG

(11) **EP 1 528 446 A1**
(43) Veröffentlichungstag der Anmeldung: **04.05.2005**
(21) Anmeldenummer: 03024964.3
(22) Anmeldetag: 29.10.2003
(51) Int. Cl.: G05B 19/416, F01D 17/14

(54) **Verfahren und Regler zum Einstellen eines Stellglieds sowie Verwendung des Reglers**

(71) Anmelder: SIEMENS AKTIENGESELLSCHAFT, 80333 München (DE)
(72) Erfinder: Koptisch, Gerhard, 91083 Beiersdorf (DE)

(57) **Zusammenfassung**

Bei einem erfindungsgemäßen Regler und Verfahren ist zum Einstellen der Position eines Stellglieds (5) vorgesehen, dass einem Sollwert (15) ein gewünschtes zeitliches Verhalten des Stellsignals (10) aufgeprägt wird und danach der Sollwert (15) als ein zeitlich veränderliches Signal zur Bildung des Stellsignals (10) herangezogen wird.

## Beschreibung

Die Erfindung betrifft ein Verfahren und einen Regler zum Einstellen eines Stellglieds. Sie betrifft weiterhin eine Verwendung des Reglers.

In vielen technischen Anlagen werden Regler eingesetzt, um die Prozessgrößen der verschiedensten verfahrenstechnischen Prozesse auf bestimmte, gewünschte Werte zu bringen und diese Werte möglichst gut zu halten. Nur dann ist ein sicherer und wirtschaftlicher Betrieb der technischen Anlage gewährleistet.

Neben dem genannten Halten der Prozessgrößen auf den gewünschten Werten spielt oftmals auch die Dynamik der eingesetzten Regelungen eine große Rolle: Zum einen sollen die Regler schnell eingreifen und zum anderen sollen die durch sie erzeugten Stellsignale ein gewünschtes zeitliches Verhalten zeigen. Insbesondere muss meist ein zu großes Überschwingen sowie ein zu schnelles Anregeln verhindert werden. Letztgenanntem Problem wird beispielsweise dadurch begegnet, dass das Stellsignal rampenförmig auf das Stellglied geschaltet wird; das Stellsignal wird dazu einem sog. Rampengeber zugeführt, welcher zusätzlich noch eine Stellwertbegrenzung aufweisen kann. Der Rampengeber erzeugt dabei ein linear bis zum Endwert des aufgeschalteten Stellsignals ansteigendes weiteres Stellsignal (welches ggf. in seiner Amplitude entsprechend vorgenannter gewünschter Stellwertbegrenzung begrenzt ist), das dem Stellglied zugeführt wird.

Beispielsweise muss bei einem Dampfkraftwerk entsprechend den Vorgaben des Herstellers der Dampfturbine die Regelung des Dampfmassenstroms zur Dampfturbine entsprechend einem vorgegebenen, gewünschten Verhalten erfolgen. Es ist dabei meist eine Stellgeschwindigkeit einzuhalten, mit welcher das Dampfventil auf einen Stellwert geöffnet oder ausgehend von diesem geschlossen werden soll. Die Dampfturbine darf also beispielsweise nicht schlagartig mit einer großen Menge an Dampf beaufschlagt werden.

Das Dampfventil kann beispielsweise als Ventil ausgeführt sein, welches über einen Antrieb betätigt wird, der über ein Servoventil angesteuert wird. Dabei wird Steuerstrom als Stellsignal für das Servoventil verwendet. Bei bekannten Regelungen wird dieses Stromsignal erzeugt, indem das Ausgangssignal (welches üblicherweise ein ermittelter fester Wert zur Erreichung eines gewünschten Dampfmassenstroms zur Dampfturbine ist) des Ventilstellungsreglers im Dampfturbinenregler mittels eines vorher genannten Rampengebers zum Stellsignal für das Dampfventil weiter verarbeitet wird. Die Anstiegsgeschwindigkeit des vom Rampengeber des Dampfturbinenreglers erzeugten Stellsignals und dessen ggf. erforderliche Stellwertbegrenzung wurden bisher erst in der Inbetriebnahmephase des Dampfturbinenreglers im Dampfkraftwerk festgelegt. Das Dampfventil weist neben einem Servoantrieb zum Öffnen und Schließen einen Stellungsgeber auf, welcher in Form eines Stromsignals die aktuelle Position hinsichtlich seines Öffnungsgrads an den Dampfturbinenregler meldet.

Zur Einstellung einer gewünschten Öffnungs- bzw. Schließgeschwindigkeit des Dampfventils wird bei der Inbetriebnahme des Dampfturbinenreglers üblicherweise das Dampfventil mehrfach zu Testzwecken geöffnet und geschlossen, um die dabei durch den Stellungsgeber des Dampfventils erzeugten Stromsignale dem jeweils aktuellen Öffnungsgrad des Dampfventils zuzuordnen. Z.B. wird das Dampfventil innerhalb eines Zeitraums von 1-5 Sek. von der komplett geschlossenen in die komplett geöffnete Position gebracht und die dabei von seinem Stellungsgeber erzeugten Stromsignale aufgenommen. Dabei könnte sich z.B. für die komplett geschlossene Position ein Strom von 4 mA einstellen, welcher danach beispielsweise im Wesentlichen oder auch gemäß eines anderen zeitlichen Verhaltens linear bis zu einem Endwert von z.B. 18 mA ansteigt, welcher der komplett geöffneten Position entspricht.

Diese während der Inbetriebnahme gewonnene Stromkennlinie wird dann im Rampengeber des Dampfturbinenreglers implementiert, so dass im Betriebsfall das Dampfturbinenventil innerhalb eines gewünschten Zeitraums geöffnet und/oder geschlossen werden kann, dass also eine vom Dampfturbinenhersteller geforderte Ventil-Stellgeschwindigkeit eingehalten wird.

Nachteilig bei diesem bekannten Verfahren ist, dass die Inbetriebnahme des Dampfturbinenreglers zeitaufwendig ist, da erst vor Ort in der Kraftwerksanlage die Anpassung des Stellsignals für das Dampfventil an ein gewünschtes zeitliches Verhalten, beispielsweise eine vorgegebene Ventil-Stellgeschwindigkeit, stattfinden muss und dafür insbesondere ein Testphase vorzusehen ist.

Der Erfindung liegt daher die Aufgabe zugrunde, einen Regler sowie ein Verfahren zum Einstellen der Position eines Stellglieds anzugeben, mittels welchen die Inbetriebnahme einer entsprechenden Regelungseinrichtung vereinfacht ist.

Bezüglich des Reglers wird die Aufgabe erfindungsgemäß gelöst durch einen Regler zum Einstellen der Position eines Stellglieds mittels eines Stellsignals, wobei einem Stellungsregler ein Sollwert und ein Istwert einer einzustellenden Größe des Stellglieds zuführbar sind und wobei dem Sollwert ein gewünschtes zeitliches Verhalten bezüglich des Stellsignals aufprägbar und der Sollwert dem Stellungsregler als zeitlich veränderliches Signal zuführbar ist.

Im Vergleich zu bekannten Reglern, bei denen die Anpassung des Stellsignals an ein gewünschtes zeitliches Verhalten, beispielsweise an eine Ventil-Stellgeschwindigkeit, erst bei der Inbetriebnahme der Regelungseinrichtung in der technischen Anlage mittels eines vorgenannten bekannten Verfahrens vorgenommen wird, ist beim erfindungsgemäßen Regler vorgesehen, das gewünschte zeitliche Verhalten des Stellsignals dadurch zu realisieren, dass dieses gewünschte zeitliche Verhalten auf den Sollwert übertragen wird und dieser Sollwert dann als ein entsprechendes zeitlich veränderliches Signal dem Regler zugeführt wird.

Es wird also bereits bei der Realisierung des Reglers im Labor oder im Testfeld die gewünschte Dynamik des Stellsignals eingestellt, indem diese bereits beim Zuführen des Sollwerts zum Regler dem Sollwert aufgeprägt wird.

Bei der Inbetriebnahme des erfindungsgemäßen Reglers in der technischen Anlage weist dann das Stellsignal von vornherein das gewünschte zeitliche Verhalten auf.

Es ist also demnach bereits bei der Projektierung des Reglers möglich, ein gewünschtes, vorgeschriebenes zeitliches Verhalten des Stellsignals zu realisieren und diesen Arbeitsschritt nicht erst bei der Inbetriebnahme auszuführen. Eine Stellventil-Begrenzung, welche bei bekannten Reglern und Verfahren erst durch eine Begrenzung der Stellgröße stattfindet, kann beim erfindungsgemäßen Regler ebenfalls bereits bei der Bildung des zeitlich veränderlichen Sollwerts berücksichtigt werden.

Auf diese Weise ist eine dynamische Stellventil-Begrenzung erreicht, welche im Wesentlichen einen Rampengeber mit einstellbaren Anstiegszeiten bzw. Abklingzeiten für das Öffnen und Schließen des Stellglieds umfasst. Diese genannten Zeiten können beispielsweise durch Zeitparameter vorgegeben werden, welche z.B. den Zeitraum identifizieren, innerhalb welchem das Stellglied zu öffnen und/oder zu schließen ist. Dabei können diese Parameter zueinander verschieden sein; es ist also möglich, verschiedene Geschwindigkeiten vorzugeben, mit welchen das Stellglied zu öffnen bzw. zu schließen ist.

Da in einer technischen Anlage, beispielsweise in einem Dampfkraftwerk, eine Vielzahl derartiger Stellglieder vorhanden sind, reduziert sich die benötigte Gesamt-Inbetriebnahmezeit durch den Einsatz eines erfindungsgemäßen Reglers beträchtlich, da die dynamische Anpassung der entsprechenden Stellsignale für jede einzelne Regelung für jedes einzelne Ventil entfällt.

Bevorzugt ist das Stellglied ein Ventil zur Dampfzuleitung zu einer Dampfturbine.

Der Einsatz eines erfindungsgemäßen Reglers bietet insbesondere in Dampfkraftwerken bei der Inbetriebnahme Vorteile, da dort praktisch immer eine Betätigungsgeschwindigkeit für das Dampfventil vorgeschrieben ist, welche realisiert werden muss und nun bereits bei der Projektierung berücksichtigt werden kann und nicht erst bei der Inbetriebnahme der Regelung.

In einer weiteren bevorzugten Ausführungsform ist der Regler ein P-Regler.

Ein derartiger Proportionalregler ist mit keinen Zeitkonstanten behaftet, so dass der zeitlich veränderliche Sollwert von diesem Regler unverzerrt und unverzögert verarbeitet wird. Auf diese Weise weist das Stellsignal das gewünschte zeitliche Verhalten mit höchster Genauigkeit auf.

Bezüglich des Verfahrens wird die Erfindung gelöst durch ein Verfahren zum Einstellen der Position eines Stellglieds mittels eines Stellsignals, wobei mittels eines gewünschten zeitlichen Verhaltens des Stellsignals eine Betätigungsgeschwindigkeit für das Stellglied festgelegt wird, wobei einem Sollwert das zeitliche Verhalten des Stellsignals aufgeprägt wird und der Sollwert als zeitlich veränderliches Signal zur Bildung des Stellsignals gebildet wird.

Dabei wird der zeitveränderliche Sollwert bevorzugt zu einem Stellungsregler geführt und das Stellsignal mittels des Stellungsreglers gebildet.

In einer besonders bevorzugten Ausführungsform ist die Betätigungsgeschwindigkeit diejenige Geschwindigkeit, mit der ein Ventil als Stellglied betätigt wird.

Die Erfindung führt weiterhin zu einer Verwendung eines erfindungsgemäßen Reglers bei einer Kraftwerksanlage zur Einstellung eines Dampfventils.

Im Folgenden wird ein Ausführungsbeispiel näher erläutert.

Es zeigen:
- FIG 1: einen Regler nach dem Stand der Technik, und
- FIG 2: einen erfindungsgemäßen Regler.

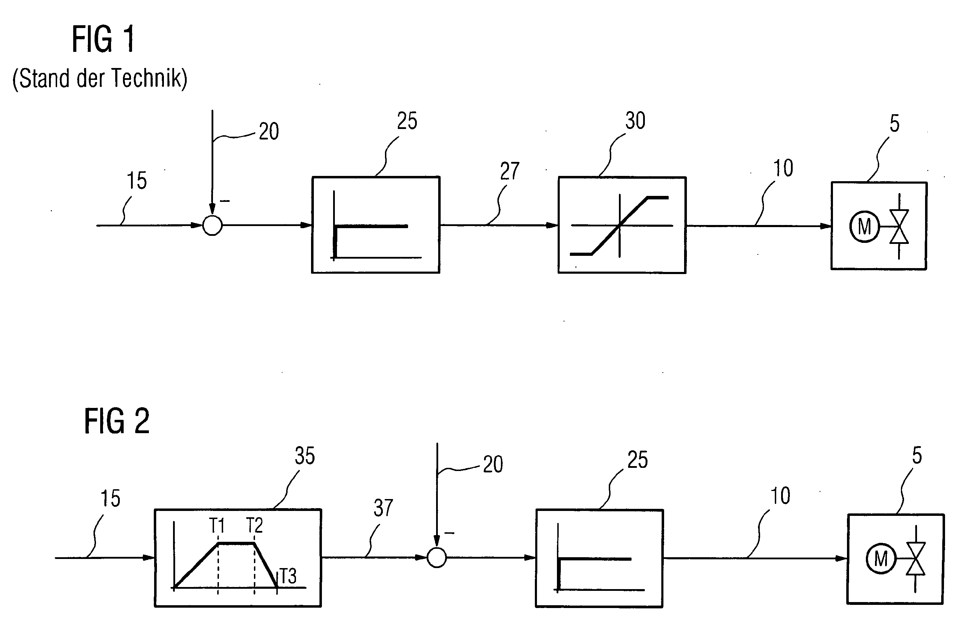

In FIG 1 ist ein Regler nach dem Stand der Technik dargestellt, mittels welchem ein Stellglied 5 betätigt wird, wobei das Stellglied ausgebildet ist als ein Ventil, dessen elektrohydraulischer Antrieb über ein Servoventil angesteuert wird.

Einem Stellungsregler 25 wird dabei die Differenz eines Sollwerts 15 und eines Istwerts 20 zugeführt und zu einem Stellungsregler-Ausgangssignal 27 verarbeitet. Der Stellungsregler 25 ist dabei ausgebildet als ein Proportionalregler. Der Sollwert 15 ist bevorzugt ausgebildet als ein Signal mit zumindest zeitweise konstantem Wert.

Das Stellungsregler-Ausgangssignal 27 weist daher ebenfalls einen konstanten Wert auf, welcher zu einer gewünschten Position des Stellglieds 5, beispielsweise einem gewünschten Öffnungsgrad, korrespondiert.

Da eine zu regelnde Komponente einer technischen Anlage meist nicht mit einer schlagartigen Änderung eines Stellsignals 10 beaufschlagt werden darf, wird das Stellungsregler-Ausgangssignal 27 zuvor einer dynamischen Begrenzung 30 zugeführt, mittels welcher ein gewünschter zeitlicher Anstieg bzw. ein gewünschtes zeitliches Abklingen sowie eine Amplitudenbegrenzung vorgenommen wird.

Die dynamische Begrenzung 30 wird bevorzugt mittels eines Rampengebers realisiert, welcher ggf. zusätzlich eine Amplitudenbegrenzung aufweist, so dass das Stellsignal 10 erst nach einer gewissen, vorgegebenen Zeit den Wert des Stellungsregler-Ausgangssignals 27 aufweist, wobei letztgenannter Wert durch die ggf. vorhandene Amplitudenbegrenzung auf einen maximalen Betrag beschränkt wird.

Durch die dynamische Begrenzung 30 ist beim dargestellten Regler aus dem Stand der Technik ein gewünschtes zeitliches Verhalten des Stellsignals 10 realisierbar, so dass das Stellsignals 10 ein gewünschtes zeitliches Verhalten, insbesondere eine gewünschte Stellgeschwindigkeit, aufweist.

Die Konfigurierung der dynamischen Begrenzung 30 geschieht bei bekannten Reglern erst während der Inbetriebnahmephase des Reglers.

FIG 2 zeigt einen erfindungsgemäßen Regler 1.

Bei diesem wird ein Sollwert 15 zu einer Signalanpassungsstufe 35 geführt, mittels welcher ein gewünschtes zeitliches Verhalten des Stellsignals dem Sollwert 15 aufgeprägt wird.

Die Signalanpassungsstufe 35 liefert folglich ein angepasstes Ausgangssignal 37 als einen zeitlich veränderlichen Sollwert, welcher vermindert um einen Istwert 20 als Regeldifferenz einem Stellungsregler 25 zugeführt wird. Dieser Stellungsregler 25 erzeugt ein zeitveränderliches Signal als Stellsignal 10, welches einem Stellglied 5, welches bevorzugt ausgebildet ist als ein mittels eines Servomotors angetriebenes Ventil, zugeführt wird.

Mittels Parametern T1,T2,T3 der Signalanpassungsstufe 35 kann das gewünschte zeitliche Verhalten festgelegt und dem Sollwert 15 aufgeprägt werden. Insbesondere umfasst die Signalanpassungsstufe 35 dazu einen Rampengeber mit einstellbaren Anstiegs- bzw. Abklingzeiten sowie ggf. einer Amplitudenbegrenzung.

Da bei den meisten Regelungsaufgaben bereits während der Projektierungsphase bekannt ist, welches zeitliche Verhalten das Stellsignal 10 aufweisen soll, kann mittels eines erfindungsgemäßen Reglers 1 dieses zeitliche Verhalten schon während der Projektierungsphase im Labor oder im Testfeld realisiert werden, indem die Signalanpassungsstufe 35 durch geeignete Vorgabe der Parameter T1,T2,T3 konfiguriert wird. Der Parameter T1 kann beispielsweise den Zeitraum angeben, in welchem das Stellglied 5 von der vollständig geschlossenen in die vollständig geöffnete Position gebracht werden soll.

Die Parameter T2 und/oder T3 können angeben, innerhalb welchen Zeitraums das Stellglied 5 von seiner vollständig geöffneten in eine vollständig geschlossene Position zu bringen ist.

## Patentansprüche

1. Regler (1) zum Einstellen der Position eines Stellglieds (5) mittels eines Stellsignals (10), wobei einem Stellungsregler (25) ein Sollwert (15) und ein Istwert (20) einer einzustellenden Größe des Stellglieds (5) zugeführt sind, **dadurch gekennzeichnet, dass** dem Sollwert (15) ein gewünschtes zeitliches Verhalten bezüglich des Stellsignals (10) aufprägbar und der Sollwert (15) dem Stellungsregler (25) als zeitlich veränderliches Signal zuführbar ist.

2. Regler (1) nach Anspruch 1, wobei das Stellglied (5) ein Ventil ist, insbesondere zur Dampfzuleitung zu einer Dampfturbine.

3. Regler (1) nach Anspruch 1 oder 2, wobei der Stellungsregler (25) ein P-Regler ist.

4. Verfahren zum Einstellen der Position eines Stellglieds (5) mittels eines Stellsignals (10),
**dadurch gekennzeichnet, dass** mittels eines gewünschten zeitlichen Verhaltens des Stellsignals (10) eine Betätigungsgeschwindigkeit für das Stellglied (5) festgelegt wird, wobei einem Sollwert (15) das zeitliche Verhalten des Stellsignals (10) aufgeprägt wird und der Sollwert (15) als zeitliches veränderliches Signal zur Bildung des Stellsignals (10) verwendet wird.

5. Verfahren nach Anspruch 4, wobei der zeitveränderliche Sollwert (15) zu einem Stellungsregler (25) geführt wird und das Stellsignals (10) mittels des Stellungsreglers (25) gebildet wird.

6. Verfahren nach Anspruch 4, wobei die Betätigungsgeschwindigkeit die Geschwindigkeit ist, mit der ein Ventil als Stellglied betätigt wird.

7. Verwendung eines Reglers nach einem der Ansprüche 1 bis 3, bei einer Kraftwerksanlage zur Einstellung eines Dampfventils.
